# EUROPÄISCHE PATENTSCHRIFT

(11) **EP 1 848 915 B1**
(45) Veröffentlichungstag und Bekanntmachung des Hinweises auf die Patenterteilung: **12.08.2015**
(21) Anmeldenummer: 06707032.6
(22) Anmeldetag: 16.02.2006
(51) Int. Cl.: F16L 55/033, F23J 13/02, F23J 13/04, F16L 59/16, F16L 59/18

(54) **DÄMMSTOFFELEMENT ZUR WÄRME- UND SCHALLDÄMMUNG EINES ROHRLEITUNGSABSCHNITTS MIT ERWEITERTEM AUSSENDURCHMESSER**
INSULATING ELEMENT FOR HEAT-INSULATING AND SOUND-PROOFING A PIPE SECTION HAVING AN EXPANDED OUTER DIAMETER
ELEMENT EN MATERIAU ISOLANT POUR ISOLER DE LA CHALEUR ET DU BRUIT UNE SECTION DE CONDUITE TUBULAIRE A DIAMETRE EXTERIEUR ELARGI

(30) Priorität: 18.02.2005 DE 102005007449
(43) Veröffentlichungstag der Anmeldung: 31.10.2007
(73) Patentinhaber: Rockwool International A/S, 2640 Hedehusene (DK)
(72) Erfinder: KLOSE, Gerd, 46286 Dorsten (DE); NOWOCZIN, Andreas, 46286 Dorsten (DE)
(74) Vertreter: Wanischeck-Bergmann, Axel
(86) Internationale Anmeldenummer: PCT/EP2006/001436
(87) Internationale Veröffentlichungsnummer: WO 2006/087200

(56) Entgegenhaltungen:
- EP-A- 1 035 375
- DE-A1- 3 737 416
- US-A- 438 507
- US-A- 1 895 420
- US-A- 3 864 909
- US-A- 4 509 561
- US-A- 4 807 669
- US-A- 5 017 314

## Beschreibung

Die vorliegende Erfindung bezieht sich auf ein Dämmstoffelement zur Wärme- und Schalldämmung eines Rohrleitungsabschnitts mit erweitertem Außendurchmesser, wie beispielsweise eine Rohrmuffe eines Muffenrohrs, ein separates Verbindungselement zum Verbinden zweier Rohre oder dergleichen.

Als Dämmstoffe solcher Dämmstoffelemente können beispielsweise Mineralwolle-Dämmstoffe verwendet werden. Mineralwolle-Dämmstoffe bestehen aus glasig erstarrten Fasern, deren Zusammenhalt durch geringe Mengen an zumeist organischen Bindemitteln bewirkt wird. Um als nicht brennbare Dämmstoffe im Sinne der DIN 4102 Teil 1 bzw. der Europäischen Baustoffklassifikation zu gelten, sind die Anteile an den organischen Bindemitteln zumeist etwa auf maximal 12 Masse-% begrenzt. Es werden häufig Gemische aus duroplastisch erhärtenden, zunächst in Wasser hoch dispergierbaren Phenol-, Formaldehyd-, Harnstoffharzen verwendet. Aus Kostengründen können diese Gemische beispielsweise durch Polysaccharide gestreckt werden. Diese Harze bilden entweder kleine Tröpfchen oder örtlich dünne Filme, so daß die Dämmstoffe in Abhängigkeit von der jeweiligen Struktur, die maßgebend beeinflußt wird von der Faserorientierung, der Rohdichte sowie der Art und Menge des Bindemittels, und der absoluten Höhe und Anzahl der Belastungen unterschiedlich elastisch-federnd reagieren. Dieses Verhalten stellt eine wichtige Gebrauchseigenschaft dar.

Insbesondere bei in Innenräumen verwendeten, thermisch belasteten Dämmstoffen werden zunehmend organisch modifizierte Silane verwendet. Diese unterschiedlichen Verbindungen lassen sich auf den üblichen Produktionsanlagen einsetzen. Ihr Masseneinsatz wird derzeit durch einen vergleichsweise hohen Preis verhindert. Um die Fasermasse durchgängig wasserabweisend zu gestalten und damit eine Kapillarwirkung der fein, dicht gepackten Fasern zu unterbinden, werden beispielsweise bis zu 0,4 Masse-% aliphatische Mineralöle direkt oder zunächst in Form einer Öl-in-Wasser-Emulsion in der Fasermasse verteilt. Die fettigen Oberflächen der Fasern binden gleichzeitig staubartige Faserbruchstücke, die bei der Herstellung oder bei der Be- und/oder Verarbeitung entstehen und deren Freisetzung verhindert werden soll.

Als Dämmstoffe für Dämmstoffelemente können beispielsweise Mineralfaser-Dämmstoffe verwendet werden. Diese bestehen aus thermisch besonders beständigen Fasern, so daß sie einen Schmelzpunkt oberhalb von 1000°C nach DIN 4102 Teil 17 erreichen. In dieser Angabe wird kein Schmelzpunkt physikalisch exakt beschrieben, vielmehr wird nur beschrieben, daß der Dickenverlust des Prüfkörpers weniger als 50 % beträgt. Steinwolle-Dämmstoffe werden beispielsweise aus Gestein unter Verwendung großer Anteile an anderen geeigneten Reststoffen hergestellt. In der chemischen Zusammensetzung dominiert naturgemäß das Siliziumdioxyd (SiO₂) als Netzwerkbildner, charakteristische Netzwerkwandler sind Erdalkalien, Eisenoxyde und als amphoter Bestandteil Al₂O₃. Die schwer verarbeitbare Schmelze wird häufig auf sogenannten Kaskaden-Zerfaserungsmaschinen in Fasern und in nichtfaserige Bestandteile umgewandelt. Ein Teil der nichtfaserigen Bestandteile kann durch eine Art Windsichtung aus der Fasermasse entfernt werden, doch verbleiben in der Regel ca. 25 bis ca. 35 Masse-% dieser nichtfaserigen Bestandteile in der Fasermasse.

Sogenannte Hybridfasern weisen den Steinwolle-Dämmstoffen ähnliche chemische Zusammensetzungen auf. Sie werden aber mittels Zerfaserungsvorrichtungen hergestellt, die im Prinzip auch bei der Produktion von sogenannten Glaswolle-Dämmstoffen verwendet werden. Die Schmelzen werden hier nahezu oder vollständig in Fasern umgewandelt, so daß Dämmstoffe aus Hybridfasern praktisch frei von nichtfaserigen Bestandteilen sind. Auch diese Dämmstoffe weisen Schmelzpunkte im Sinne der DIN 4102 Teil 17 von mehr als 1000°C auf und sind bei der handelsüblichen Unterscheidung in Glaswolle- und Steinwolle-Dämmstoffe, zumindest im Hinblick auf die hier wesentlichen thermischen Eigenschaften, sinngleich den Steinwolle-Dämmstoffen und werden nachfolgend diesen zugeordnet. Bei Angaben von Rohdichten ist jedoch der Gehalt an nichtfaserigen Bestandteilen in den Steinwolle-Dämmstoffen im engeren Sinn zu berücksichtigen. Steinwolle-Dämmstoffe werden zumeist in Form von aufrollbaren Filzen, plattenförmigen Elementen, auf Trägerschichten wie Drahtgeflechte aufgesteppte Matten sowie unter anderem als stopffähige Fasermasse in den Verkehr gebracht. Rohrleitungen können mit Filzen oder Matten oder mit Hilfe von Formkörpern wie Rohrschalen gedämmt werden. Bei den Rohrschalen handelt es sich in der Regel um hohlzylindrische Formelemente mit unterschiedlichen Wandstärken (Dämmdicken), deren Innendurchmesser dem Außendurchmesser der zu dämmenden Rohrleitung entspricht.

Da die Dämmstoffe zumeist nach der Verlegung der Rohrleitung auf diese aufgebracht werden, sind die hohlzylindrischen Formkörper in Axialrichtung tangential auf der einen Wandseite auf- und auf der gegenüberliegenden Wandseite eingeschnitten, so daß der Formkörper soweit aufgeklappt werden kann, daß er quer zu seiner Axialrichtung über die Rohrleitung geschoben werden kann. Die einzelnen Rohrschalen werden stumpf aneinander geschoben und anschließend mit beispielsweise dünnem Draht geschlossen und in ihrer jeweiligen Position gesichert.

Rohrschalen können auch aus zwei oder mehreren Segmenten zusammengesetzt werden. Um ein präzises Zusammenfügen zu ermöglichen, können die Flanken der Segmente beispielsweise abgeschrägt oder abgestuft sein.

Häufig werden jedoch Rohrschalen verwendet, die eine Ummantelung oder Kaschierung aus Aluminiumfolie aufweisen. Zumeist werden Polyethylen-Aluminium-Verbundfolien verwendet, bei denen eine thermoplastische Schicht nach dem Erhitzen als Kleberschicht dient. Gleichzeitig ver- oder behindert sie zumindest ein allzu leichtes Durchstoßen der dünnen Aluminiumschichten bei der Verarbeitung oder während der Nutzungsdauer. Zwischen der thermoplastischen Schicht und der Aluminium-Schicht werden auch häufig gitternetzförmige Gewebe aus insbesondere nicht brennbaren textilen Glasfasern eingelegt. Auch diese wirken einem Durchstoßen der Außenschicht beispielsweise durch die Finger des Handwerkers entgegen und verbessern gleichzeitig das äußere Erscheinungsbild der Rohrschale. Diese Ummantelung wird zumeist mit einer überlappenden Folie auf der Rohrschale aufgebracht, die mit einem Adhäsivkleber beschichtet ist. Nach dem Entfernen einer Schutzfolie kann die überlappende Folie fest auf die Ummantelung der Rohrschale aufgeklebt werden, so daß der Längsstoß nicht geschlossen ist. Die Querstöße nebeneinander angeordneter Rohrschalen werden zumeist mit Klebebändern aus Aluminiumverbundfolien überdeckt.

Rohrschalen werden einmal dadurch hergestellt, daß mit Binde- und anderen Zusatzmitteln imprägnierte Faserbahnen unter leichtem Druck um einen Kern gewickelt und die Bindemittel anschließend mit Heißluft ausgehärtet werden.

Diese Rohrschalen können sowohl in Bezug auf ihren Innendurchmesser wie auch ihre Außenmantelfläche nachbearbeitet werden, um zentrisch exakte Hohlzylinder zu erhalten.

Rohrschalen werden auch aus Dämmstoffblöcken entsprechender Größe herausgesägt.

In der EP 1 097 335 B1 werden Rohrschalen und ihre Herstellung beschrieben. Diese Rohrschalen werden aus einem Vormaterial hergestellt, das zuvor unterschiedlich hoch verdichtet worden ist. Ihre Oberflächen werden spanabhebend bearbeitet. Im Querschnitt gesehen weisen diese Rohrschalen eine äußere Zone mit einer höheren Rohdichte, somit einer geringeren Kompressibilität und höheren Festigkeit auf, als eine innen liegende Zone. Die äußere Zone kann bis etwa zweimal so hoch verdichtet werden wie die innere Zone. Die Rohrschale kann mit einer aufgeklebten Folie kaschiert sein.

Diese Rohrschalen lassen sich auch aus Dämmstoffplatten gewinnen, welche entsprechend der Lehre der US-A-5,981,024 hergestellt worden sind.

Bei Rohdichten, die 80 kg/m³ überschreiten, sind beide großen Flächen relativ fest, wenngleich prinzipiell flexibel. Um kleine Unterschiede zwischen Rohrleitungsaußendurchmessern aus verschiedenen Werkstoffen wie auch Toleranzen innerhalb einer Rohrleitungssorte ausgleichen und auch den Sitz nachträglich korrigieren zu können, werden entsprechend der EP 1 031 782 A2 Rohrschalen hergestellt, die auf der Innenseite mehrere stegartige Erhöhungen und gemäß der EP 1 184 614 A2 einen elliptischen inneren Querschnitt aufweisen. Ferner können die Wandungen von Rohrschalen in koaxialer Richtung streifenförmig stark belastet werden, was auch als walken bezeichnet wird, um lokale Festigkeitsverluste und damit eine verbesserte Verformbarkeit zu erzielen. Ausgesprochen biegsame Dämmstoffelemente in Form von Rohrschalen werden entsprechend der EP 0 315 127 A1 aus einzelnen Segmenten zusammengesetzt. Charakteristisch für diese Segmente ist, daß die Kompressibilität der die Segmente bildenden Fasermasse in axialer Richtung des Dämmstoffelementes am höchsten ist. Die Segmente werden punkt- oder streifenförmig mit einer in sich gewellten Ummantelung verklebt. Die Verklebungsstreifen verlaufen senkrecht zu der Achsrichtung und behindern somit nur in einem ganz schmalen Bereich die Verkürzung oder Dehnung der Fasermasse. Diese in axialer Richtung biegsamen Dämmstoffelemente eignen sich insbesondere für die Dämmung von Rohrleitungsbögen.

Dämmstoffelemente für Rohrleitungsabschnitte mit gegenüber der eigentlichen Rohrleitung erweitertem Außendurchmesser, wie beispielsweise die Rohrmuffe eines Muffenrohrs, ein Verbindungselement zum Verbinden zweier Rohrleitungen, Ventile oder dergleichen, werden normalerweise vor Ort manuell mittels Dämmstoffmatten erzeugt, indem diese um den entsprechenden Rohrleitungsabschnitt gewickelt und anschließend gegebenenfalls mit einer Ummantelung kaschiert werden. Die Qualität der Wärme- und Schalldämmung solcher Rohrleitungsabschnitte mit erweitertem Außendurchmesser hängt also nicht zuletzt vom Geschick derjenigen Person ab, die die Dämmstoffmatten und die Ummantelung an dem Rohrleitungsabschnitt anbringt. Ferner ist eine derartige Dämmung von Rohrleitungsabschnitten mit erweitertem Außendurchmesser sehr zeit- und entsprechend kostenintensiv.

Das Dokument EP1035375A offenbart einen Aufbau gemäss dem Oberbegriff der Ansprüche 1 und 6.

Es ist eine **Aufgabe** der vorliegenden Erfindung, ein verbessertes Dämmstoffelement zur Wärme- und Schalldämmung zumindest eines Rohrleitungsabschnitts zu schaffen, dessen Außendurchmesser gegenüber der eigentlichen Rohrleitung erweitert ist.

Diese Aufgabe wird gemäß der vorliegenden Erfindung durch einen Aufbau nach Anspruch 1 **gelöst**. Die abhängigen Ansprüche beziehen sich auf individuelle Ausgestaltungen der vorliegenden Erfindung. Das Dämmstoffelement zur Wärme- und Schalldämmung zumindest eines Rohrleitungsabschnitts mit erweitertem Außendurchmesser, wie beispielsweise eine Rohrmuffe eines Muffenrohrs, ein separates Verbindungselement zum Verbinden von Rohren, ein Ventil oder dergleichen, umfaßt erfindungsgemäß eine einen Hohlraum zur Aufnahme zumindest des Rohrleitungsabschnitts aufweisende Dämmschale. In dieser Dämmschale kann der Rohrleitungsabschnitt mit erweitertem Außendurchmesser einfach angeordnet werden, ohne daß zeit- und kostenintensive manuelle Abdämmarbeiten wie beim zuvor beschriebenen Umwickeln des entsprechenden Rohrleitungsabschnitts mit Dämmstoffmatten und ggf. beim anschließenden Ummanteln erforderlich sind.

Gemäß der vorliegenden Erfindung entspricht eine Innenkontur eines den Rohrleitungsabschnitt aufnehmenden Dämmschalenabschnitts einer Außenkontur des aufzunehmenden Rohrleitungsabschnitts und liegt formschlüssig an der Außenkontur eines bestimmungsgemäß in dem Hohlraum aufgenommenen Rohrleitungsabschnitts an. Die Innenkontur des Dämmschalenabschnitts kann dabei beispielsweise durch ein spanabhebendes Verfahren erzeugt werden.

Die Rohdichte des Dämmstoffs beträgt vorteilhaft zumindest 80 kg/m³, so daß dieser relativ fest, wenngleich prinzipiell flexibel ist. Ferner weist der Dämmstoff bevorzugt organische Bindemittel mit einem Gehalt von zumindest 1 % Trockenmasse bezogen auf den Dämmstoff auf.

Die Gehalte an organischen duroplastisch aushärtenden Harzen liegen bevorzugt zwischen 0,8 und 1,2 Masse-%. Die Schale wird dadurch weicher und kann entsprechend enger an die Oberfläche des zu dämmenden Objekts angepreßt werden. Bei Verwendung von spröd-harten anorganischen Bindemitteln, wie beispielsweise organisch modifizierten Silanen, wird deren Anteil auf die jeweilige Rohdichte abgestimmt, um einerseits feste aber noch flexible Dämmstoffe mit ausreichend anpassungsfähigen Oberflächen zu generieren.

Der Außenumfang der Dämmschale ist bevorzugt mit einer ein- oder mehrlagigen Schutzschicht umgeben. Die Schutzschicht kann beispielsweise Wasserdampf bremsende oder sperrende Metallfolien aufweisen. Auch kann sie Kunststoffolien umfassen, um die Außenseite des Dämmstoffelementes gegen die Angriffe der in feuchten Klebern oder feuchten Mörteln wirksamen Alkalien zu schützen. Glasfasergittergewebe oder dergleichen können als Bewehrung dienen, um das Dämmstoffelement vor äußeren mechanischen Einflüssen zu schützen.

Gemäß einer weiteren Variante der vorliegenden Erfindung ist ein Dämmstoffbereich der Dämmschale zumindest in dem den Rohrleitungsabschnitt aufnehmenden Dämmschalenabschnitt derart flexibel ausgebildet, daß sich dieser an eine Außenkontur eines bestimmungsgemäß in den Hohlraum der Dämmschale angeordneten Rohrleitungsabschnitt anpaßt und dieser mit einem Anpreßdruck anliegt. Im Gegensatz zur ersten erfindungsgemäßen Variante ist die Innenkontur des den Rohrleitungsabschnitt mit erweitertem Außendurchmesser aufnehmenden Dämmschalenabschnitts also nicht entsprechend der Außenkontur des Rohrleitungsabschnitts vorgeformt, sondern der Dämmstoffbereich der Dämmschale ist derart elastisch ausgebildet, daß sich seine Innenkontur erst beim Einlegen eines Rohrleitungsabschnitts an dessen Außenkontur anpaßt, wodurch eine kraftschlüssige und im wesentlichen formschlüssige Aufnahme des Rohrleitungsabschnitts erzeugt wird. Auch diese Variante ermöglicht ein wenig zeit- und kostenintensives Dämmen des Rohrleitungsabschnitts mit erweitertem Außendurchmesser.

Um die Flexibilität des den Rohrleitungsabschnitt im bestimmungsgemäß eingesetzten Zustand umgebenden Dämmstoffbereichs der Dämmschale zu erhöhen, kann dieser gewalkt sein, wodurch die Festigkeit deutlich herabgesetzt wird.

Ferner umfaßt der Dämmstoffbereich vorteilhaft Mineralfasern, die sich im wesentlichen längs zum bestimmungsgemäß aufgenommenen Rohrleitungsabschnitt erstrecken, wodurch die Verformbarkeit in axialer Richtung des Dämmstoffbereichs verbessert wird, so daß sich dieser besser an den aufzunehmenden Rohrleitungsabschnitt anlegen kann.

Zudem oder alternativ kann der besagte Dämmstoffbereich wenigstens einen sich radial erstreckenden Einschnitt aufweisen. Durch Einbringen von konzentrischen Schlitzen oder sonstigen Ausnehmungen in die Innenwandung des den Rohrleitungsabschnitt aufnehmenden Dämmstoffbereichs der Dämmschale wird ebenfalls die Flexibilität erhöht. Die maximale Breite der Schlitze bzw. Ausnehmungen beträgt dabei bevorzugt 3 mm, besser noch 1,5 bis 2 mm. Die Abstände der Schlitze bzw. Ausnehmungen sind abhängig von der Außenkontur des Rohrleitungsabschnitts. Bei abrupten Änderungen des Querschnitts sind sie enger zueinander anzuordnen und tiefer anzulegen als bei allmählichen Übergängen. Durch das Einschneiden bzw. Einschlitzen können die dadurch zumeist gebildeten ringförmigen Segmente unabhängig auf die Art und Größe der Verformung reagieren, damit letztlich zumindest größtenteils eine formschlüssige Verbindung mit dem zu dämmenden Objekt entsteht. Die Flexibilität des Dämmstoffs wird gegebenenfalls noch dadurch erhöht, daß dieser Bereich vorzugsweise nach dem Anlegen der Schlitze in radialer Richtung gedrückt bzw. gewalkt wird, was dort die Festigkeit des Dämmstoffs vermindert und seine Flexibilität erhöht, wie bereits zuvor beschrieben.

Ferner kann der den Rohrleitungsabschnitt aufnehmende Dämmstoffbereich der Dämmschale aus mehreren ringförmigen, in axialer Richtung nebeneinander angeordneten Segmenten ausgebildet sein, die einen unterschiedlichen Innendurchmesser aufweisen können. Die Rohdichten, die Bindemittel der einzelnen Segmente und somit deren Festigkeiten können unterschiedlich hoch sein. Die einzelnen Segmente können vorgewalkt sein. Um einen sicheren Anschluß an das freie Ende eines Rohrleitungsabschnitts zu erreichen, sollte zumindest das abschließende Segment dessen Außendurchmesser aufweisen.

Bevorzugt ist die Dämmschale in einem Hohlraum einer äußeren, einen Dämmstoff aufweisenden Schutzschale angeordnet, deren Außenumfang wiederum mit einer ein. Oder mehrlagigen Schutzschicht umgeben sein kann, wie es zuvor bereits beschrieben wurde.

Der Dämmstoff der äußeren Schutzschale weist bevorzugt höhere Gehalte an organischen Bindemitteln als der Dämmstoff der den Rohrleitungsabschnitt aufnehmenden Dämmschale auf, wodurch die äußere Schutzschale eine höhere Festigkeit als die Dämmschale erhält. Aus dem gleichen Grund weist der Dämmstoff der äußeren Schutzschale auch bevorzugt eine höhere Rohdichte als die Dämmschale auf. Die Mineralfaser der äußeren Schutzschale sind bevorzugt in radialer Richtung des Dämmstoffelementes angeordnet, wodurch die Festigkeit in dieser Richtung und somit der Schutz der Dämmschale vor äußeren mechanischen Einflüssen verbessert wird.

Um ein Aufklappen von Spalten zwischen der äußeren Schutzschale und der den Rohrleitungsabschnitt aufnehmenden Dämmschale zu verhindern, die einen Durchgang von Rauchgasen ermöglichen würden, werden diese bevorzugt aneinander befestigt. Die Befestigung erfolgt vorteilhaft mittels Klebstoff, vorzugsweise mit einem gefüllten anorganischen Kleber, beispielsweise auf Basis von Wassergläsern. Der Klebstoff kann vollflächig oder ringförmig, beispielsweise in konzentrischen Ringen an axial voneinander beabstandeten Stellen aufgetragen werden. Die Verklebung beider Schalen erleichtert naturgemäß auch das exakte Umlegen des Dämmstoffelementes um das zu dämmende Objekt.

Vorteilhaft steht entweder die äußere Schutzschale in axialer Richtung des aufzunehmenden Rohrleitungsabschnitts über die den Rohrleitungsabschnitt aufnehmende Dämmschale vor oder die Dämmschale steht in axialer Richtung des aufzunehmenden Rohrleitungsabschnitts über die äußere Schutzschale vor, um eine Art Labyrinthdichtung mit einem entsprechend gestalteten Anschlußelement zu bilden.

Schließlich sind die den Rohrleitungsabschnitt aufnehmende Dämmschale und/oder die äußere Schutzschale vorteilhaft aufklappbar ausgebildet, so daß das Dämmstoffelement quer zu seiner Axialrichtung über den Rohrleitungsabschnitt geschoben werden kann. Dazu kann die oder können die das Dämmstoffelement bildenden Schalen auf der einen Seite auf- und auf der gegenüberliegenden Seite eingeschnitten sein, so daß das Dämmstoffelement in Richtung der eingeschnittenen Seite aufgeklappt werden kann. Alternativ kann das Dämmstoffelement natürlich auch mehrteilig ausgebildet sein, beispielsweise zweiteilig.

Nachfolgend wird die vorliegende Erfindung unter Bezugnahme auf die beiliegende Zeichnung genauer beschrieben. Darin ist
- Fig. 1a: eine Längsschnittansicht einer ersten Ausführungsform des erfindungsgemäßen Aufbaus;
- Fig. 1b: eine Längsschnittansicht einer zweiten Ausführungsform des erfindungsgemäßen Aufbaus;
- Fig. 2a: eine Längsschnittansicht einer ersten Ausführungsform einer zweiten Variante des erfindungsgemäßen Dämmstoffelementes ohne Muffenrohr;
- Fig. 2b: eine Längsschnittansicht einer zweiten Ausführungsform einer zweiten Variante des erfindungsgemäßen Dämmstoffelementes ohne Muffenrohr;
- Fig. 3a: eine Längsschnittansicht einer dritten Ausführungsform einer zweiten Variante des erfindungsgemäßen Dämmstoffelementes ohne Muffenrohr;
- Fig. 3b: eine Längsschnittansicht einer vierten Ausführungsform einer zweiten Variante des erfindungsgemäßen Dämmstoffelementes ohne Muffenrohr;
- Fig. 4a: eine Querschnittansicht eines erfindungsgemäßen Dämmstoffelementes ohne Rohrleitung, bzw. ohne Muffenrohr;
- Fig. 4b: eine Querschnittansicht eines alternativen erfindungsgemäßen Dämmstoffelementes ohne Rohrleitung, bzw. ohne Muffenrohr;
- Fig. 5a: eine Längsschnittansicht einer fünften Ausführungsform einer zweiten Variante des erfindungsgemäßen Dämmstoffelementes ohne Muffenrohr;
- Fig. 5b: eine Längsschnittansicht einer alternativen Ausführungsform einer zweiten Variante des erfindungsgemäßen Dämmstoffelementes ohne Muffenrohr und
- Fig. 6: eine Schnittansicht einer Brandabschottung mit einem Dämmstoffelement. Diese Brandabschottung bildet keine Ausführungsform des erfindungsgemässen Aufbaus.

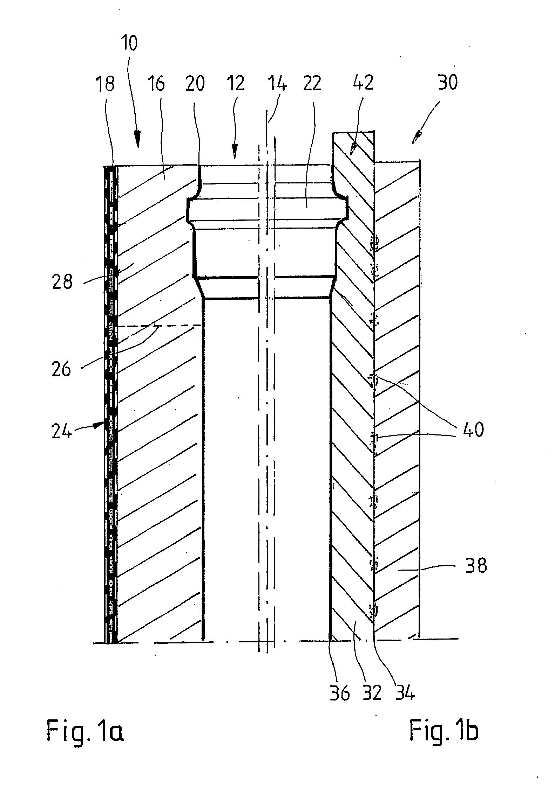

Gleiche Bezugsziffern beziehen sich nachfolgend auf gleichartige Bauteile. Fig. 1 a ist eine Längsschnittansicht und zeigt eine erste Ausführungsform einer ersten Variante eines erfindungsgemäßen aufklappbaren Dämmstoffelementes 10, in das ein handelsübliches Muffenrohr 12 eingesetzt ist. Der Aufbau des Dämmstoffelementes 10 und des Muffenrohrs 12 ist jeweils rotationssymmetrisch, weshalb in Fig. 1 a der Einfachheit halber lediglich die Hälfte links der Symmetrieachse 14 dargestellt ist.

Das Dämmstoffelement 10 umfaßt eine hohlzylindrische Dämmschale 16 mit einer zylindrischen Außenfläche 18 und einer im wesentlichen zylindrischen Innenfläche 20, wobei letztere einen Hohlraum zur Aufnahme des Muffenrohrs 12 definiert. Die Innenfläche 20 der Dämmschale 16 ist in dem eine Rohrmuffe 22 des Muffenrohrs 12 aufnehmenden Dämmschalenabschnitt unter Berücksichtigung der zulässigen Grenzabmaße des zu dämmenden Muffenrohrs 12 derart konturiert, daß sie sich formschlüssig an diese anpressen läßt. Die Rohrmuffe 22 stellt bei der vorliegenden Ausführungsform den Rohrleitungsabschnitt mit erweitertem Außendurchmesser dar. Die Konturierung der Innenfläche 20 der Dämmschale 16 erfolgt durch einen entsprechenden Abtrag des überflüssigen Materials, beispielsweise unter Verwendung eines spanabhebenden Verfahrens. Die Mindest-Rohdichte des die Dämmschale 16 bildenden Dämmstoffs beträgt 80 kg/m³. Der Gehalt an organischen Bindemitteln z. B. den üblicherweise verwendeten Gemischen aus Phenol-, Formaldehyd-, Harnstoffharzen ist zumindest 1 % Trockenmasse bezogen auf den Dämmstoff. Die Außenfläche 18 der Dämmschale 16 ist mit einer aufgeklebten, mehrlagigen, folienartigen Schutzschicht 24 versehen, beispielsweise mit einer fünflagigen Schutzschicht, die von außen nach innen aus Schichten PE-Folie, Metall-Folie, PE-Folie und Glasfasergittergewebe, Metall-Folie, PE-Folie bestehen kann. Die Metall-Folie hat dabei insbesondere Wasserdampf bremsende oder sperrende Wirkung. Die PE-Folien schützen gegen die Angriffe der in feuchten Klebern oder feuchten Mörteln wirksamen Alkalien. Das in die PE-Schicht eingebettete Glasfasergittergewebe dient prinzipiell zur Bewehrung der Ummantelung zum Schutz vor äußeren mechanischen Einflüssen. Die Metall-Folien bestehen vorwiegend bevorzugt aus Aluminium.

Als Alternative ist in Fig. 1 a mittels der gestrichelten Linie 26 ein kurzes Formstück 28 angedeutet, das nur den unmittelbaren, die Rohrmuffe 22 des Muffenrohrs 12 umgebenden Abschnitt der Dämmschale 16 erfaßt.

Fig. 1b ist eine Längsschnittansicht einer weiteren Ausführungsform der ersten Variante eines erfindungsgemäßen Dämmstoffelementes 30, in das ein herkömmliches Muffenrohr 12 eingesetzt ist. Das Dämmstoffelement 30 und das Muffenrohr 12 weisen jeweils einen rotationssymmetrischen Aufbau auf, weshalb in Fig. 1b der Einfachheit halber nur die Hälfte rechts der Symmetrieachse 14 dargestellt ist.

Das Dämmstoffelement 30 umfaßt eine innere hohlzylindrische Dämmschale 32 mit einer zylindrischen Außenfläche 34 und einer im wesentlichen zylindrischen Innenfläche 36, wobei letztere in dem die Rohrmuffe 22 des Muffenrohrs 12 aufnehmenden Dämmschalenabschnitt unter Berücksichtigung der zulässigen Grenzabmaße des zu dämmenden Muffenrohrs 12 derart konturiert ist, daß zwischen der Innenfläche 36 und der Außenkontur der Rohrmuffe 22 eine formschlüssige Verbindung erzeugt wird. Um die Außenfläche 34 der inneren Dämmschale 32 ist eine hohlzylindrische äußere Schutzschale 38 angeordnet, wobei die Außenfläche 34 der Dämmschale 32 und die Innenfläche der äußeren Schutzschale 38 einander berühren und vorzugsweise mit einem gefüllten anorganischen Klebstoff, beispielsweise auf Basis von Wassergläsern, miteinander verbunden sind. Der Kleber kann vollflächig aufgetragen werden. Gemäß Fig. 1b ist er jedoch partiell ringförmig in konzentrischen Ringen aufgetragen, was durch die Klebeverbindungen 40 angedeutet ist. Die Verklebung der Dämmschale 32 und der äußeren Schutzschale 38 erleichtert naturgemäß auch das exakte Umlegen des Dämmstoffelementes 30 um das Muffenrohr 12.

Die äußere Schutzschale 38 dient primär dem mechanischen Schutz der Dämmschale 32 und kann deshalb eine höhere Rohdichte, insbesondere auch höhere Gehalte an organischen Binde- und sonstigen Zusatzmitteln enthalten. Die äußere Schutzschale 38 des Dämmstoffelementes 30 kann, ähnlich wie in Fig. 1 a gezeigt, durch aufgeklebte oder aufgespannte Umhüllungen aus Blechen oder Folien geschützt sein. Weiterhin können an und für sich bekannte Gewebe aus Glasfasern oder Synthesefasern wie Carbon- oder Aramitfasern, die gegebenenfalls mit intumeszenten Massen getränkt sind, mit den Schalen 32 und/oder 38 verbunden sein.

Die Dämmschale 32 kann eine von der äußeren Schutzschale 38 abweichende Rohdichte aufweisen. Vorzugsweise ist diese gleich oder geringer als die der äußeren Schutzschale 38, wenn der Gehalt an organischen Bindemitteln mindestens ca. 30 - 50 % geringer ist. Die Gehalte an organischen duroplastisch aushärtenden Harzen können bis auf ca. 0,8 bis 1,2 Masse-% abgesenkt werden. Der Dämmstoff der Dämmschale 32 wird dadurch weicher und kann dadurch enger an die Oberfläche des Muffenrohrs 12 angepreßt werden. Bei Verwendung von spröd-harten anorganischen Bindemitteln, wie beispielsweise organisch modifizierten Silanen, wird deren Anteil auf die jeweilige Rohdichte abgestimmt, um einerseits feste aber noch flexible Dämmstoffe mit ausreichend anpassungsfähigen Oberflächen zu generieren.

Die Dämmschale 32, die das Muffenrohr 12 aufnimmt, kann in axialer Richtung des aufzunehmenden Muffenrohrs 12 über die äußere Schutzschale 38 vorstehen, wie es durch den vorstehenden Abschnitt 42 der Dämmschale 32 angedeutet ist. Auf diese Weise kann eine Art Labyrinthdichtung mit einem entsprechend gestalteten Anschlußelement ausgebildet werden. Alternativ kann natürlich auch ein Abschnitt der äußeren Schutzschale 38 axial über die Dämmschale 32 vorstehen.

Die Dämmschale 32 und die äußere Schutzschale 38 sowie das Muffenrohr 12 können einfach ineinander gelegt werden. Da die üblicherweise verwendeten Gemische aus Phenol-, Formaldehyd- und Harnstoffharz bei höheren Rohdichten und bei anhaltend höheren Temperaturen zu Oxidationsreaktionen mit entsprechender Energiefreisetzung neigen, kann die ohnehin dem Brandangriff ausgesetzte äußere Schutzschale 38 stärker sintern als die innere. Die Klebeverbindungen 40 verhindern dabei ein Aufklappen von Spalten zwischen der Außenfläche 34 der Dämmschale 32 und der Innenfläche der äußeren Schutzschale 38.

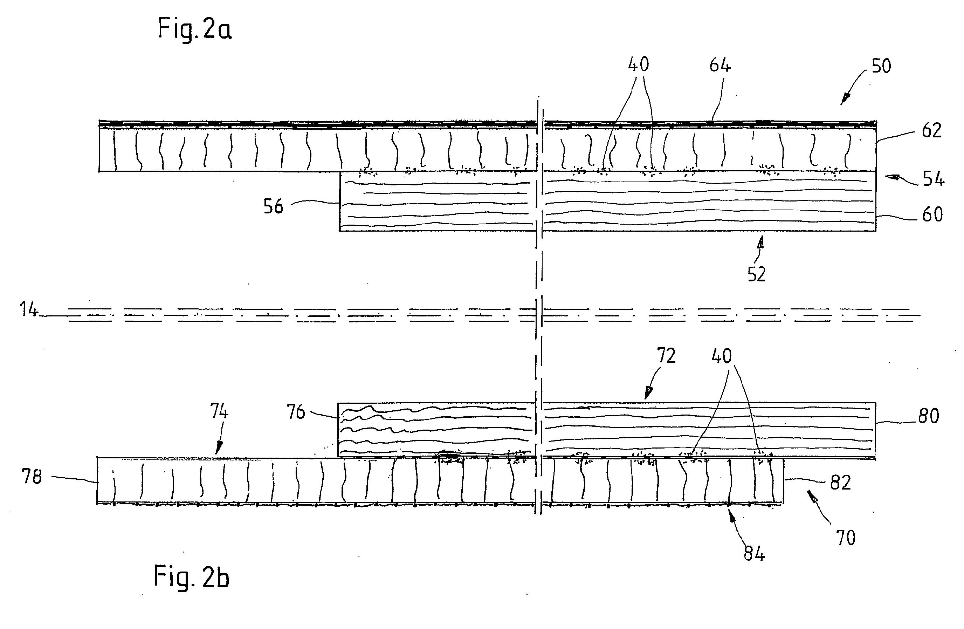

Fig. 2a ist eine Längsschnittansicht einer ersten Ausführungsform einer zweiten Variante eines erfindungsgemäßen Dämmstoffelementes 50 zur Aufnahme geometrisch einfach geformter Muffenrohre. Das Dämmstoffelement 50 ist rotationssymmetrisch aufgebaut, weshalb in Fig. 2a der Einfachheit halber nur eine Hälfte bis zur Symmetrieachse 14 dargestellt ist. Das Dämmstoffelement 50 umfaßt eine Dämmstoff aufweisende, hohlzylindrische innere Dämmschale 52 und eine Dämmstoff aufweisende, hohlzylindrische äußere Schutzschale 54. Die den Außenumfang der Dämmschale 52 bildende Fläche und die den Innenumfang der äußeren Schutzschale 54 bildende Fläche sind über Klebeverbindungen 40 aneinander befestigt. Die Klebeverbindungen 40 sind ringförmig ausgebildet und axial voneinander beabstandet. Als Klebstoff wird bevorzugt anorganischer Klebstoff verwendet. Die Dämmschale 52 weist eine geringere Länge als die äußere Schutzschale 54 auf, so daß ein freies Ende 56 der Dämmschale 52 gegenüber dem entsprechenden freien Ende 58 der äußeren Schutzschale 54 zurückspringt, wodurch ein Aufnahmeraum für eine Rohrmuffe entsteht. Das freie Ende 56 der Dämmschale 52, das als Übergang vom Rohr zur Rohrmuffe des Muffenrohrs dient, kann wahlweise gerade, wie in Fig. 2a gezeigt, oder leicht abgeschrägt ausgebildet sein. Die anderen freien Enden 60 und 62 der Dämmschale 52 und der äußeren Schutzschale 54 schließen hingegen bündig miteinander ab.

Die Dämmstoffe der Dämmschale 52 und der äußeren Schutzschale 54 können denjenigen der entsprechenden inneren Schale 32 und der entsprechenden äußeren Schutzschale 38 der in Fig. 1b dargestellten Ausführungsform entsprechen, wobei die Rohdichte des Dämmstoffs der äußeren Schutzschale 54 ohne nichtfaserige Bestandteile bevorzugt größer als 80 kg/m³ ist.

Die äußere Schutzschale 54 kann mit einer Schutzschicht 64 versehen sein, die vorliegend einen dreilagigen Aufbau mit, von außen nach innen betrachtet, einer Polyethylen-Folie, einer Aluminium-Folie und wiederum einer Polyethylen-Folie aufweist. Die Schutzschicht 64 kann wahlweise natürlich auch einen anderen Aufbau aufweisen.

Ferner ist in Fig. 2a die Ausrichtung der die Dämmschale 52 und die äußere Schutzschale 54 bildenden Mineralfasern angedeutet. Die Mineralfasern der Dämmschale 52 erstrecken sich im wesentlichen in Längsrichtung des Dämmstoffelements 50, also längs zu dem aufzunehmenden Muffenrohr bzw. zu der aufzunehmenden Rohrmuffe, wodurch die Verformbarkeit der Dämmschale 52 und somit das Anlegen der Dämmschale 52 an die Außenkontur des Rohrleitungsabschnitts verbessert wird. Die Mineralfasern der äußeren Schutzschale 54 erstrecken sich hingegen im wesentlichen radial, also quer zu dem aufzunehmenden Muffenrohr bzw. zu der aufzunehmenden Rohrmuffe, wodurch in radialer Richtung eine erhöhte Festigkeit der äußeren Schutzschale 54 und somit ein guter Schutz vor äußeren Einflüssen erzeugt wird.

Fig. 2b ist eine Längsschnittansicht einer weiteren Ausführungsform eines erfindungsgemäßen Dämmstoffelementes 70. Das Dämmstoffelement 70 umfaßt eine einen Dämmstoff aufweisende, hohlzylindrische innere Dämmschale 72 zur Aufnahme eines Muffenrohrs und eine einen Dämmstoff aufweisende, hohlzylindrische äußere Schutzschale 74, wobei die Dämmschale 72 und die äußere Schutzschale 74, ähnlich wie bei den in den Fign. 1b und 2a gezeigten Ausführungsformen, über Klebeverbindungen 40 aneinander befestigt sind. Ein der Rohrmuffe zugewandtes freies Ende 76 der Dämmschale 72 ist gegenüber einem freien Ende 78 der äußeren Schutzschale 74 zurückgesetzt angeordnet, wodurch ein Freiraum zur Aufnahme der Rohrmuffe gebildet ist. Das freie Ende 76 der Dämmschale 72, das im Übergangsbereich vom Rohr zur Rohrmuffe des Muffenrohrs angeordnet ist, ist stark gedrückt, d. h. gewalkt worden, was die Festigkeit deutlich herabgesetzt hat. Das freie Ende 76 der Dämmschale ist nicht mehr mit der äußeren Schutzschale 74 verklebt, so daß die Dämmschale 72 formschlüssig an den Erweiterungsbereich der Rohrmuffe angepreßt werden kann. Das andere freie Ende 80 der Dämmschale 72 steht über das entsprechende freie Ende 82 der äußeren Schutzschale 74 vor, um eine Art Labyrinthdichtung mit einem entsprechend gestalteten Anschlußelement auszubilden.

Die äußere Oberfläche der äußeren Schutzschale 74 ist mit einer Imprägnierung 84 versehen, bei der es sich beispielsweise um einen Silikat-Kleber, um Silikat-Dispersion-Systeme, um Klebemörtel oder dergleichen handeln kann, um einen kraftschlüssigen Verbund zu dem Einbettmörtel im Bereich von Wanddurchführungen zu erzielen. Diese Imprägnierung 84 kann durch Glasfasergittergewebe oder Glasfaserwirrvliese verstärkt sein.

Ferner ist auch in Fig. 2b die Ausrichtung der die Dämmschale 72 und die äußere Schutzschale 74 bildenden Mineralfasern angedeutet. Die Mineralfasern der Dämmschale 72 erstrecken sich im wesentlichen in Längsrichtung des Dämmstoffelements 70, also längs zu dem aufzunehmenden Muffenrohr bzw. zu der aufzunehmenden Rohrmuffe, wodurch die Verformbarkeit der Dämmschale 72 und somit das Anlegen der Dämmschale 72 an die Außenkontur des Rohrleitungsabschnitts verbessert wird. Die Mineralfasern der äußeren Schutzschale 74 erstrecken sich hingegen im wesentlichen radial, also quer zu dem aufzunehmenden Muffenrohr bzw. zu der aufzunehmenden Rohrmuffe, wodurch in radialer Richtung eine erhöhte Festigkeit der äußeren Schutzschale 74 und somit ein guter Schutz vor äußeren Einflüssen erzeugt wird.

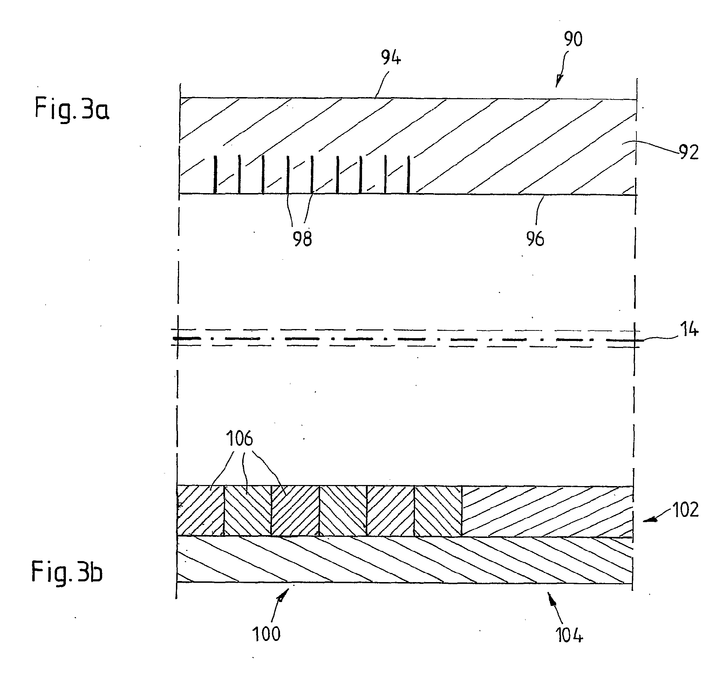

Fig. 3 zeigt eine Längsschnittansicht einer weiteren Ausführungsform eines erfindungsgemäßen Dämmstoffelementes 90, das einen rotationssymmetrischen Aufbau aufweist, weshalb in Fig. 3a der Einfachheit halber nur eine Hälfte des Dämmstoffelementes 90 bis zur Symmetrielinie 14 dargestellt ist. Das Dämmstoffelement 90 umfaßt eine Dämmstoff aufweisende, im wesentlichen hohlzylindrische Dämmschale 92 mit einer zylindrischen Außenfläche 94 und einer zylindrischen Innenfläche 96. An der Innenfläche 96 sind in dem die Rohrmuffe aufnehmenden Dämmstoffbereich der Dämmschale 92 konzentrische Einschnitte, Schlitze oder sonstige Ausnehmungen 98 vorgesehen. Die maximale Breite der Schlitze beträgt 3 mm, besser jedoch 1,5 bis 2 mm. Die Abstände der Schlitze in axialer Richtung sind abhängig von der Außenkontur der Rohrmuffe. Bei abrupten Änderungen des Querschnitts sind sie enger zueinander anzuordnen und tiefer anzulegen als bei allmählichen Übergängen. Durch das Einschneiden bzw. Einschlitzen können die dadurch zumeist gebildeten ringförmigen Elemente unabhängig auf die Art und Größe der Verformung reagieren, damit letztlich eine im wesentlichen formschlüssige Verbindung mit dem zu dämmenden Objekt entsteht. Die Flexibilität des Dämmstoffs der Dämmschale 92 wird gegebenenfalls dadurch erhöht, daß der die Rohrmuffe aufnehmende Abschnitt vorzugsweise nach dem Anlegen der Schlitze in radialer Richtung gedrückt bzw. gewalkt wird, was dort die Festigkeit des Dämmstoffs vermindert und seine Flexibilität erhöht. Die in Fig. 3a dargestellte Ausführungsform der vorliegenden Erfindung weist den Vorteil auf, daß in diesem Dämmstoffelement 90 eine Vielzahl unterschiedlicher Rohrmuffen aufgenommen werden können, also unterschiedlich große und unterschiedlich geformte Rohrmuffen.

Fig. 3b ist eine Längsschnittansicht eines Dämmstoffelementes 100 gemäß der vorliegenden Erfindung, die wiederum eine hohlzylindrische innere Dämmschale 102 und eine die Dämmschale 102 umgebende hohlzylindrische äußere Schutzschale 104 aufweist, wobei die Dämmschale 102 mit der äußeren Schutzschale 104 beispielsweise mittels Klebstoff verbunden sein kann, was in Fig. 3b jedoch nicht näher gezeigt ist. Die Dämmschale 102 und die äußere Schutzschale 104 weisen jeweils einen rotationssymmetrischen Aufbau auf, weshalb in Fig. 3b der Einfachheit halber nur eine Hälfte des Dämmstoffelementes 100 bis zur Symmetrielinie 14 gezeigt ist.

Die in Fig. 3b dargestellte Ausführungsform zeichnet sich dadurch aus, daß die Dämmschale 102 in dem die Rohrmuffe aufnehmenden Abschnitt nebeneinander angeordnete Dämmstoffscheiben 106 umfaßt, die einen einheitlichen Innendurchmesser aufweisen. Die Fasern in diesen Dämmstoffscheiben 106 können radialstrahlig oder überwiegend konzentrisch angeordnet sein. Durch die Anordnung von Dämmstoffscheiben 106 in dem die Rohrmuffe aufnehmenden Dämmstoffbereich der Dämmschale 102 wird ebenfalls die Flexibilität erhöht, so daß die Rohrmuffe formschlüssig in der Dämmschale 102 aufgenommen wird. Die Dämmstoffscheiben 106 können gegebenenfalls vorgedrückt bzw. gewalkt sein, wodurch die Flexibilität des die Rohrmuffe aufnehmenden Dämmstoffbereichs weiter erhöht wird.

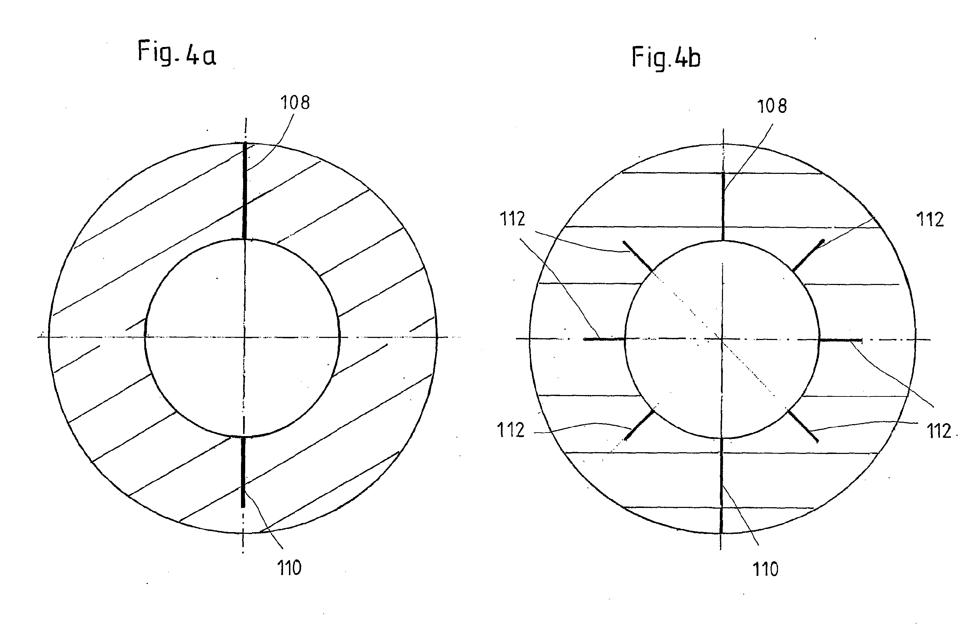

Fig. 4a zeigt eine Querschnittansicht eines erfindungsgemäßen Dämmstoffelementes, bei dem es sich um ein Dämmstoffelement gemäß einer der in den Fign. 1 bis 3 dargestellten Ausführungsformen handeln kann. Unabhängig von der Tatsache, ob das Dämmstoffelement nur eine Dämmschale oder zusätzlich eine äußere Schutzschale aufweist, ist die Wandung des hohlzylindrischen Dämmstoffelementes entlang einer Längsseite vollständig durchtrennt, was durch den Schnitt 108 angedeutet ist, und an einem dem Schnitt 108 im wesentlichen gegenüberliegenden Abschnitt des Dämmstoffelementes teilweise eingeschnitten, was durch den Schnitt 110 angedeutet ist. Aufgrund der Schnitte 108 und 110 kann das Dämmstoffelement in einfacher Art und Weise aufgeklappt werden, um ein Muffenrohr in dem Dämmstoffelement anzuordnen.

Fig. 4b zeigt eine Querschnittansicht eines alternativen Dämmstoffelementes, bei dem es sich wiederum um eines der in den Fign. 1 bis 3 dargestellten Dämmstoffelemente handeln kann. Das in Fig. 4b dargestellte Dämmstoffelement entspricht im wesentlichen dem in Fig. 4a gezeigten Dämmstoffelement. Zusätzlich zu den Schnitten 108 und 110 sind in Längsrichtung des Dämmstoffelementes weitere radiale Einschnitte 112 vorgesehen, wodurch ein Aufklappen des Dämmstoffelementes weiter erleichtert wird.

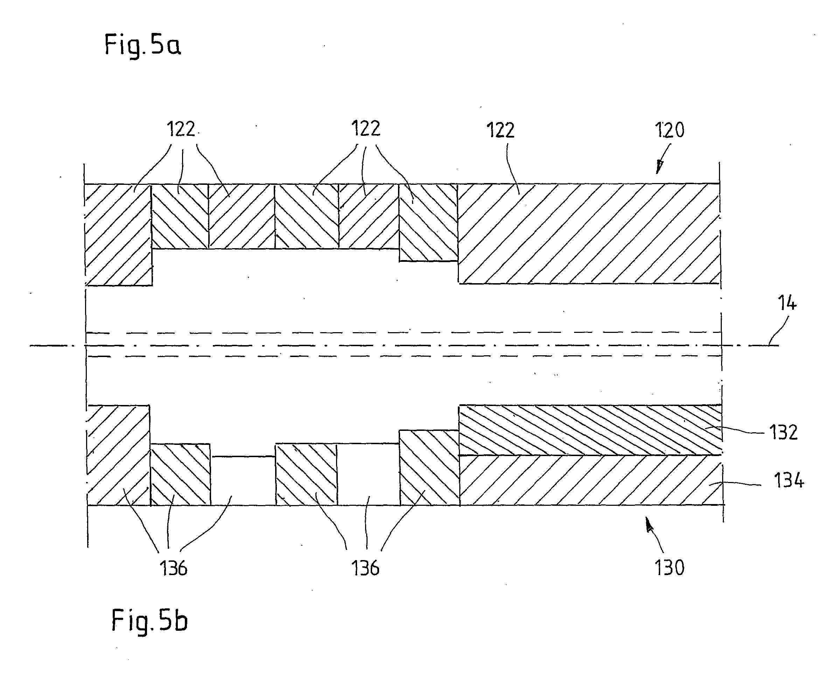

Fig. 5a zeigt eine Längsschnittansicht einer weiteren Ausführungsform eines erfindungsgemäßen Dämmstoffelementes 120 gemäß der vorliegenden Erfindung, das einen rotationssymmetrischen Aufbau aufweist, weshalb der Einfachheit halber nur eine Hälfte bis zur Symmetrielinie 14 dargestellt ist. Das Dämmstoffelement 120 umfaßt eine Dämmstoff aufweisende, hohlzylindrische Dämmschale 122 zur Aufnahme eines Muffenrohrs. In dem die Rohrmuffe aufnehmenden Abschnitt der Dämmschale 122 ist die Dämmschale 122 aus einzelnen Dämmstoffscheiben 124 gebildet, die axial nebeneinander angeordnet und aneinander befestigt sind, beispielsweise unter Verwendung eines geeigneten Klebstoffes. Die Innendurchmesser der Dämmstoffscheiben 124 sind zumindest teilweise voneinander verschieden, wodurch die Außenkontur der aufzunehmenden Rohrmuffe angenähert wird. Die einzelnen Dämmstoffscheiben 124 können ferner unterschiedliche Rohdichten sowie unterschiedliche Bindemittel und Bindemittelgehalte aufweisen, um auf diese Weise die Elastizität der einzelnen Dämmstoffscheiben 124 einzustellen. Zudem können einzelne oder alle Dämmstoffscheiben 124 vorgedrückt bzw. gewalkt sein, um die Festigkeit des Dämmstoffes in gewünschter Weise zu reduzieren. Um einen sicheren Anschluß an das frei Ende eines Muffenrohrs zu erzielen, weist zumindest die abschließende Dämmstoffscheibe 124 am freien Ende der Dämmschale 122 einen Innendurchmesser auf, der im wesentlichen dem Außendurchmesser des Muffenrohrendes entspricht. Ferner kann auch das Dämmstoffelement 120 Einschnitte in Längsrichtung aufweisen, wie in den Fign. 4a und 4b gezeigt ist.

Fig. 5b zeigt eine Längsschnittansicht einer Ausführungsform eines Dämmstoffelementes 130 gemäß der vorliegenden Erfindung, das in dem das Rohr eines Muffenrohrs aufnehmenden Abschnitt ein zweiteiligen Aufbau aufweist, nämlich eine Dämmstoff aufweisende, hohlzylindrische innere Dämmschale 132 und eine Dämmstoff aufweisende, hohlzylindrische äußere Schutzschale 134, welche die Dämmschale 132 umgibt und an dieser befestigt sein kann. Die Dämmstoffe der Dämmschale 132 und der äußeren Schutzschale 134 können voneinander verschieden und somit an den entsprechenden Verwendungszweck angepaßt sein.

Der die Rohrmuffe aufnehmende Dämmschalenabschnitt des in Fig. 5b dargestellten Dämmstoffelementes 130 ist wiederum durch axial nebeneinander angeordnete und aneinander befestigte Dämmstoffscheiben 136 gebildet, die unterschiedliche Innendurchmesser aufweisen und somit an die Außenkontur der aufzunehmenden Rohrmuffe zumindest teilweise angepaßt sind. Die einzelnen Dämmstoffscheiben 136 können voneinander verschiedene Rohdichten, Bindemittel und Bindemittelgehalte aufweisen, um die Festigkeiten der einzelnen Dämmstoffscheiben 136 einzustellen. Die einzelnen Scheiben können gegebenenfalls vorgewalkt werden. Um einen sicheren Anschluß an das freie Ende eines Muffenrohrs zu erreichen, weist auch hier zumindest die abschließende Dämmstoffscheibe 136 am freien Ende des Dämmstoffelementes 130 einen Innendurchmesser auf, der dem entsprechenden Außendurchmesser der Rohrmuffe entspricht.

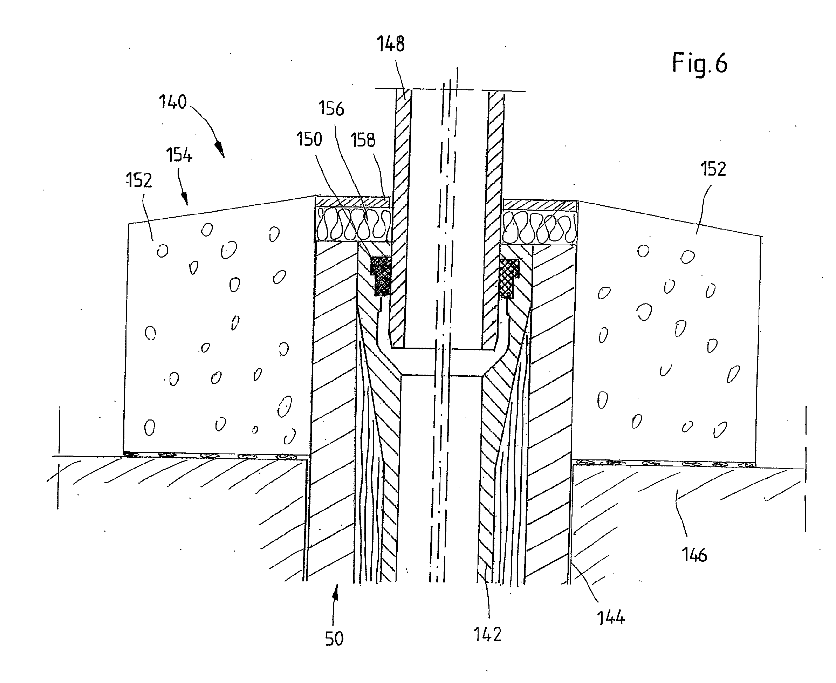

Fig. 6 zeigt eine Schnittansicht einer nicht erfindungsgemäßen Brandabschottung 140 am Beispiel einer Deckendurchführung. Wie in Fig. 6 gezeigt ist, ist ein erfindungsgemäßes Dämmstoffelement 50 gemäß Fig. 2a, in das ein Muffenrohr 142 eingesetzt ist, durch eine zylindrische Öffnung 144 einer Decke 146 derart geführt, daß es ein Stück weit von der Decke 146 aufwärts vorsteht. Das Dämmstoffelement 50 wurde unter Bezugnahme auf Fig. 2a bereits ausführlich beschrieben, weshalb hierauf nachfolgend nicht näher eingegangen werden soll. In das freie Ende des Muffenrohrs 142 ist eine Abwasserleitung 148 eingesetzt, die über eine in der Rohrmuffe des Muffenrohrs 142 vorgesehene Ringdichtung 150 entlang ihres Außenumfangs abgedichtet wird. Um den Außenumfang des von der Decke 146 vorstehenden Abschnitts des Dämmstoffelementes 50 sind einzelne Formstücke 152 angeordnet und miteinander verklebt sowie auf die Decke 146 aufgeklebt. Die Formstücke 152 bilden zusammen ein Formteil 154 mit rechteckigem Außenumfang und einer im wesentlichen mittig angeordneten runden Durchgangsöffnung, durch die sich der von der Decke 146 vorstehende Abschnitt des Dämmstoffelementes 50 erstreckt. Die einzelnen Formstücke 152 können aus Beton, Porenbeton, Sinterglas, Schaumglas oder dergleichen hergestellt sein. Sie können gegebenenfalls mit einer haftvermittelnden Schicht zum Ankleben von Fliesen oder zum Auftrag einer Farbbeschichtung versehen sein. Das erzeugte Formteil 154 dient im wesentlichen dazu, den über die Decke 146 überstehenden Abschnitt des Dämmstoffelementes 50 vor äußeren Beschädigungen oder gegen das Einlaufen und die Durchfeuchtung von Reinigungswasser zu schützen. Der Zwischenraum zwischen dem Formteil 154 und angrenzenden Raumwänden kann gegebenenfalls mit Mörtel aufgefüllt werden. Bei entsprechender Abfasung der unteren Ecken des Formteils 154 bzw. der einzelnen Formstücke 152 können zusätzlich Dichtstoffe zwischen der Decke 146 und dem Formteil 154 eingebracht werden, was in Fig. 6 jedoch nicht gezeigt ist. Das Dämmstoffelement 60 wird an seinem freien Ende ebenso wie das freie Ende des in diesem aufgenommenen Muffenrohrs 142 nach oben hin durch eine aufklappbare Dämmstoffscheibe 156 und feste Formteile 158 abgeschlossen. Die Dämmstoffscheibe kann beispielsweise aus Mineralwolle ausgebildet sein. Die festen Formteile 158 können vorteilhaft streichfähig imprägniert werden.

Es sollte klar sein, daß die zuvor beschriebenen Ausführungsformen des erfindungsgemäßen Aufbaus nicht einschränkend sind. Vielmehr sind Modifikationen und Änderungen möglich, ohne den Schutzbereich der vorliegenden Erfindung zu verlassen, der durch die beiliegenden Ansprüche definiert ist.

### Bezugszeichenliste

- 10: Dämmstoffelement
- 12: Muffenrohr
- 14: Symmetrieachse
- 16: Dämmschale
- 18: Außenfläche
- 20: Innenfläche
- 22: Rohrmuffe
- 24: Schutzschicht
- 26: gestrichelte Linie
- 28: Formstück
- 30: Dämmstoffelement
- 32: Dämmschale
- 34: Außenfläche
- 36: Innenfläche
- 38: äußere Schutzschale
- 40: Klebeverbindungen
- 42: vorstehender Abschnitt

- 50: Dämmstoffelement
- 52: Dämmschale
- 54: äußere Schutzschale
- 56: freies Ende
- 58: freies Ende
- 60: freies Ende
- 62: freies Ende
- 64: Schutzschicht

- 70: Dämmstoffelement
- 72: Dämmschale
- 74: äußere Schutzschale
- 76: freies Ende
- 78: freies Ende
- 80: freies Ende
- 82: freies Ende
- 84: Imprägnierung

- 90: Dämmstoffelement
- 92: Dämmschale
- 94: Außenfläche
- 96: Innenfläche
- 98: Ausnehmungen

- 100: Dämmstoffelement
- 102: Dämmschale
- 104: äußere Schutzschale
- 106: Dämmstoffscheiben
- 108: Schnitt
- 110: Schnitt
- 112: Schnitt

- 120: Dämmstoffelement
- 122: Dämmschale
- 124: Dämmstoffscheiben
- 130: Dämmstoffelement
- 132: Dämmschale
- 134: äußere Schutzschale
- 136: Dämmstoffscheiben

- 140: Brandabschottung
- 142: Muffenrohr
- 144: Öffnung
- 146: Decke
- 148: Abwasserleitung
- 150: Ringdichtung
- 152: Formstücke
- 154: Formteil
- 156: Dämmstoffscheibe
- 158: feste Formteile

## Patentansprüche

1. Aufbau umfassend
- ein Dämmstoffelement (10; 30; 50; 70; 90; 100; 120; 130) zur Wärme- und Schalldämmung und
- eine Rohrleitung mit einem Rohrleitungsabschnitt (22), dessen
Außendurchmesser gegenüber der eigentlichen Rohrleitung erweitert ist, wobei das Dämmstoffelement (10; 30; 50; 70; 90; 100; 120; 130) eine Dämmschale (16; 32; 52; 72; 92; 102; 122; 132) mit einem Dämmschalenabschnitt aufweist, in dem ein Hohlraum zur Aufnahme des Rohrleitungsabschnitts (22) mit erweitertem Außendurchmesser ausgebildet ist,
wobei das Dämmstoffelement aus Mineralfasern ausgebildet ist,
**dadurch gekennzeichnet,**
**dass** der Dämmschalenabschnitt eine vorgeformte
Innenkontur hat, die mit der Außenkontur des
Rohrleitungsabschnitts (22) mit erweitertem Durchmesser
übereinstimmt und formschlüssig an der Außenkontur
des aufgenommenen Rohrleitungsabschnitts (22) mit erweitertem Durchmesseer anliegt.

2. Aufbau nach Anspruch 1, **dadurch gekennzeichnet, dass** die Rohdichte des Dämmstoffs der Dämmschale (16; 32; 52; 72; 92; 102; 122; 132) aus Mineralfasern zumindest 80 kg/m³ beträgt.

3. Aufbau nach Anspruch 2, **dadurch gekennzeichnet, dass** der Dämmstoff der Dämmschaie (16; 32; 52; 72; 92; 102; 122; 132) organische Bindemittel mit einem Gehalt von zumindest 1 % Trockenmasse aufweist.

4. Aufbau nach Anspruch 4, **dadurch gekennzeichnet, dass** der Dämmstoff der Dämmschaie (16; 32; 52; 72; 92; 102; 122; 132) Gehalte an organischen duroplastisch aushärtenden Harzen von 0,8 bis 1,2 Masse-% aufweist.

5. Aufbau nach einem der vorhergehenden Ansprüche, **dadurch gekennzeichnet, dass** die Dämmschale (16) in ihrem Außenbereich mit einer ein- oder mehrlagigen Schutzschicht (24) umgeben ist.

6. Aufbau umfassend
- ein Dämmstoffelement (10; 30; 50; 70; 90; 100; 120; 130) zur Wärme- und Schalldämmung und
- eine Rohrleitung mit einem Rohrleitungsabschnitt (22), dessen
Außendurchmesser gegenüber der eigentlichen Rohrleitung erweitert ist, wobei das Dämmstoffelement (10; 30; 50; 70; 90; 100; 120; 130) eine Dämmschale (16; 32; 52; 72; 92; 102; 122; 132) mit einem Dämmschalenabschnitt aufweist, in dem ein Hohlraum zur Aufnahme des Rohrleitungsabschnitts (22) mit erweitertem Außendurchmesser ausgebildet ist,
wobei das Dämmstoffelement aus Mineralfasern ausgebildet ist,
**dadurch gekennzeichnet,**
**dass** der Dämmschalenabschnitt zumindest in einem Bereich des aufzunehmenden Rohneitungsabschnitts (22) mit erweitertem Durchmesser
derart flexibel ausgebildet ist, dass sich dieser Bereich
an die Außenkontur des Rohrleitungsabschnitts (22) mit erweitertem Durchmesser anpasst und an diesem anliegt.

7. Aufbau nach Anspruch 6, **dadurch gekennzeichnet, dass** der an der Außenkontur des Rohrleitungsabschnitts (22) anliegende Bereich des Dämmschalenabschnitts gewalkt ist.

8. Aufbau nach Anspruch 6 oder 7, **dadurch gekennzeichnet, dass** der Bereich Mineralfasern umfasst, die sich längs zum Rohrleitungsabschnitt (22) erstrecken.

9. Aufbau nach einem der Ansprüche 6 bis 8, **dadurch gekennzeichnet, dass** der Bereich wenigstens einen sich radial erstreckenden Einschnitt (98) aufweist.

10. Aufbau nach einem der Ansprüche 6 bis 9, **dadurch gekennzeichnet, dass** der Bereich aus mehreren ringförmigen, in axialer Richtung nebeneinander angeordneten Segmenten (106; 122; 136) gebildet ist.

11. Aufbau nach Anspruch 10, **dadurch gekennzeichnet, dass** die Segmente (106; 122; 136) unterschiedliche Innendurchmesser aufweisen.

12. Aufbau nach einem der Ansprüche 10 oder 11, **dadurch gekennzeichnet, dass** die Segmente (106; 122; 136) unterschiedliche Festigkeiten aufweisen.

13. Aufbau nach einem der vorhergehenden Ansprüche, **dadurch gekennzeichnet, dass** die Dämmschale (32; 52; 72; 102; 132) in einem Hohlraum einer äußeren, einen Dämmstoff aus Mineralfasern aufweisenden Schutzschale (38; 54; 74; 104; 134) angeordnet ist.

14. Aufbau nach Anspruch 13, **dadurch gekennzeichnet, dass** eine Außenmantelfläche der äußeren Schutzschale (54; 74) mit einer ein- oder mehrlagigen Schutzschicht (64; 84) umgeben ist.

15. Aufbau nach Anspruch 13 oder 14, **dadurch gekennzeichnet, dass** der Dämmstoff der äußeren Schutzschale (38; 54; 74; 104; 134) höhere Gehalte an organischen Bindemitteln als der Dämmstoff der den Rohrleitungsabschnitt (22) aufnehmenden Dämmschale (32; 52; 72; 102; 132) aufweist.

16. Aufbau nach einem der Ansprüche 13 bis 15, **dadurch gekennzeichnet, dass** der Dämmstoff der äußeren Schutzschale (38; 54; 74; 104; 134) eine höhere Rohdichte als der Dämmstoff der den Rohrleitungsabschnitt (22) aufnehmenden Dämmschale aufweist.

17. Aufbau nach einem der Ansprüche 13 bis 16, **dadurch gekennzeichnet, dass** die Dämmschale (32; 52; 72; 102; 132) und die äußere Schutzschale (38; 54; 74; 104; 134) aneinander befestigt sind.

18. Aufbau nach einem der Ansprüche 13 bis 17, **dadurch gekennzeichnet, dass** entweder die äußere Schutzschale (38; 54; 74; 104; 134) in axialer Richtung des aufzunehmenden Rohrleitungsabschnitts über die Dämmschale (32; 52; 72; 102; 132) oder die Dämmschale (32; 52; 72; 102; 132) in axialer Richtung des aufzunehmenden Rohrleitungsabschnitts über die äußere Schutzschale (38; 54; 74; 104; 134) vorsteht.

19. Aufbau nach einem der Ansprüche 13 bis 18, **dadurch gekennzeichnet, dass** die Mineralfasern der äußeren Schutzschale (38; 54; 74; 104; 134) in radialer Richtung des Dämmstoffelementes (30; 50; 70; 100; 130) ausgerichtet sind.

20. Aufbau nach einem der vorhergehenden Ansprüche, **dadurch gekennzeichnet, dass** die Dämmschale (16; 32; 52; 72; 92; 102; 122; 132) und/oder die äußere Schutzschale (32; 52; 72; 102; 132) aufklappbar ausgebildet sind.

## Claims

1. Structure, comprising
- un insulating element (10; 30; 70; 90; 100; 120; 130) for heat insulation and sound proofing, and
- a pipe having a pipe section (22) the outer diameter of which is
enlarged with respect to the actual pipe,
wherein the insulating element (10; 30; 70; 90; 100; 120; 130) includes an insulating shell (16; 32; 52; 72; 92; 102; 122; 132) having an insulating shell section in which a cavity for receiving said pipe section (22) having the enlarged outer diameter is formed, said insulating element being made from mineral fibers, ***characterized* in that** the insulating shell section has a preformed inner contour that corresponds to the outer contour of the enlarged diameter pipe section (22) and is applied in a form-fit manner against the outer contour of the enlarged diameter pipe section (22) that is received.

2. Structure according to claim 1, ***characterized* in that** the bulk density of the insulating material of the insulating shell (16; 32; 52; 72; 92; 102; 122; 132) from mineral fibers amounts to at least 80 kg/m³.

3. Structure according to claim 2, ***characterized* in that** insulating material of the insulating shell (16; 32; 52; 72; 92; 102; 122; 132) comprises organic binders with a content of dry mass of at least 1 %.

4. Structure according to claim 4, ***characterized* in that** the insulating material of the insulating shell (16; 32; 52; 72; 92; 102; 122; 132) comprises contents of organic thermosetting resins of 0.8 to 1.2 % by weight.

5. Structure according to one of the preceding claims, ***characterized* in that** the insulating shell (16) is surrounded in its outer region by a one or multilayered protective layer (24).

6. Structure, comprising
- un insulating element (10; 30; 70; 90; 100; 120; 130) for heat insulation and sound proofing, and
- a pipe having a pipe section (22) the outer diameter of which is
enlarged with respect to the actual pipe,
wherein the insulating element (10; 30; 70; 90; 100; 120; 130) includes an insulating shell (16; 32; 52; 72; 92; 102; 122; 132) having an insulating shell section in which a cavity for receiving said pipe section (22) having the enlarged outer diameter is formed, said insulating element being made from mineral fibers, ***characterized* in that** the insulating shell section at least in the region of the enlarged diameter pipe section (22) to be received is formed in a flexible manner so that this region adapts to the outer contour of the enlarged diameter pipe section (22) and is applied against the same.

7. Structure according to claim 6, ***characterized* in that** the region of the insulating shell section applied against the outer contour of the pipe section (22) is fulled.

8. Structure according to claim 6 or 7, ***characterized* in that** said region comprises mineral fibers extending longitudinally to the pipe section (22).

9. Structure according to one of the claims 6 to 8, ***characterized* in that** said region includes at least one radially extending incision (98).

10. Structure according to one of the claims 6 to 9, ***characterized* in that** said region is formed by several annular, axially juxtaposed segments (106; 122; 136).

11. Structure according to claim 10, ***characterized* in that** the segments (106; 122; 136) have different inner diameters.

12. Structure according to one of the claims 10 or 11, ***characterized* in that** the segments (106; 122; 136) present different strengths.

13. Structure according to one of the preceding claims, ***characterized* in that** the insulating shell (32; 52; 72; 102; 132) is disposed in a cavity of an outer protective shell (38; 54; 74; 104; 134) comprising an insulating material from mineral fibers.

14. Structure according to claim 13, ***characterized* in that** an outer lateral area of the outer protective shell (54; 74) is surrounded by a one or multilayered protective layer (64; 84).

15. Structure according to claim 13 or 14, ***characterized* in that** the insulating material of the outer protective shell (38; 54; 74; 104; 134) has higher contents of organic binders than the insulating material of the insulating shell (32; 52; 72; 102; 132) receiving the pipe section (22).

16. Structure according to one of the claims 13 to 15, ***characterized* in that** the insulating material of the outer protective shell (38; 54; 74; 104; 134) has a higher bulk density than the insulating material of the insulating shell receiving the pipe section (22).

17. Structure according to one of the claims 13 to 16, ***characterized* in that** the insulating shell (32; 52; 72; 102; 132) and the outer protective shell (38; 54; 74; 104; 134) are fixed to each other.

18. Structure according to one of the claims 13 to 17, ***characterized* in that** either the outer protective shell (38; 54; 74; 104; 134) protrudes over the insulating shell (32; 52; 72; 102; 132) in the axial direction of the pipe section to be received or the insulating shell (32; 52; 72; 102; 132) protrudes over the outer protective shell (38; 54; 74; 104; 134) in the axial direction of the pipe section to be received.

19. Structure according to one of the claims 13 to 18, ***characterized* in that** the mineral fibers of the outer protective shell (38; 54; 74; 104; 134) are oriented in the radial direction of the insulating element (30; 50; 70; 100; 130).

20. Structure according to one of the preceding claims, ***characterized* in that** the insulating shell (16; 32; 52; 72; 92; 102; 122; 132) and the outer protective shell (32; 52; 102; 132) are constructed in such a manner that they can be hinged open.

## Revendications

1. Structure, comprenant
- un élément en matériau isolant (10; 30; 50; 70; 90; 100; 120; 130) pour l'isolation thermique et acoustique et
- une conduite tubulaire avec une section de conduite tubulaire (22) dont le diamètre extérieur est élargi par rapport à la conduite tubulaire propre,
l'élément en matériau isolant (10; 30; 50; 70; 90; 100; 120; 130) comprenant une coquille isolante (16; 32; 52; 72; 92; 102; 122; 132) avec une section de coquille isolante à l'intérieur de laquelle est formée une cavité pour le logement de la section de conduite tubulaire (22) de diamètre extérieur élargi, ledit élément en matériau isolant étant fabriqué à base de fibres minérales, ***caractérisée* en ce que** la section de coquille isolante présente un contour intérieur préformé qui correspond au contour extérieur de la section de conduite tubulaire (22) de diamètre élargi et qui s'applique par forme contre le contour extérieur de la section de conduite tubulaire de diamètre élargi logée.

2. Structure selon la revendication 1, ***caractérisée* en ce que** la masse volumique apparente du matériau isolant de la coquille isolante (16; 32; 52; 72; 92; 102; 122; 132) fabriquée à base de fibres minérales est au moins 80 kg/m³.

3. Structure selon la revendication 2, ***caractérisée* en ce que** le matériau isolant de la coquille isolante (16; 32; 52; 72; 92; 102; 122; 132) présente des liants organiques avec une teneur en matière sèche d'au moins 1%.

4. Structure selon la revendication 4, ***caractérisée* en ce que** le matériau isolant de la coquille isolante (16; 32; 52; 72; 92; 102; 122; 132) présente des teneurs en résines thermodurcissables de 0,8 à 1,2 % en masse.

5. Structure selon l'une des revendications précédentes, ***caractérisée* en ce que** la coquille isolante (16) est entourée sur sa partie extérieure d'une couche protectrice (24) à une ou plusieurs couches.

6. Structure, comprenant
- un élément en matériau isolant (10; 30; 50; 70; 90; 100; 120; 130) pour l'isolation thermique et acoustique et
- une conduite tubulaire avec une section de conduite tubulaire (22) dont le diamètre extérieur est élargi par rapport à la conduite tubulaire propre,
l'élément en matériau isolant (10; 30; 50; 70; 90; 100; 120; 130) comprenant une coquille isolante (16; 32; 52; 72; 92; 102; 122; 132) avec une section de coquille isolante à l'intérieur de laquelle est formée une cavité pour le logement de la section de conduite tubulaire (22) de diamètre extérieur élargi, ledit élément en matériau isolant étant fabriqué à base de fibres minérales, ***caractérisée* en ce qu'**au moins dans une partie de la section de conduite tubulaire (22) de diamètre élargi, la section de coquille isolante est formée de manière flexible de sorte que cette partie s'épouse le contour extérieur de la section de conduite tubulaire (22) de diamètre élargi et s'applique contre celui-ci.

7. Structure selon la revendication 6, ***caractérisée* en ce que** la partie de la section de coquille isolante qui s'applique contre la section de conduite tubulaire (22) est foulée.

8. Structure selon la revendication 6 ou 7, ***caractérisée* en ce que** ladite partie comporte des fibres minérales s'étendant longitudinalement par rapport à la section de conduite tubulaire (22).

9. Structure selon l'une des revendications 6 à 8, ***caractérisée* en ce que** ladite partie comporte au moins une encoche (98) s'étendant radialement.

10. Structure selon l'une des revendications 6 à 9, ***caractérisée* en ce que** la partie est formée á base de plusieurs segments annulaires (106; 122; 136) juxtaposés en direction axiale.

11. Structure selon la revendication 10, ***caractérisée* en ce que** les segments (106; 122; 136) présentent des diamètres intérieurs différents.

12. Structure selon la revendication 10 ou 11, ***caractérisée* en ce que** les segments (106; 122; 136) présentent des résistances différentes.

13. Structure selon l'une des revendications précédentes, ***caractérisée* en ce que** la coquille isolante (32; 52; 72; 102; 132) est disposée dans une cavité d'une coquille protectrice extérieure (38; 54; 74; 104; 134) présentant un matériau isolant á base de fibres minérales.

14. Structure selon la revendication 13, ***caractérisée* en ce qu'**une surface enveloppante extérieure de la coquille protectrice extérieure (54; 74) est entourée d'une couche protectrice (64; 84) à une ou plusieurs couches.

15. Structure selon la revendication 13 ou 14, ***caractérisée* en ce que** le matériau isolant de la coquille extérieure (38; 54; 74; 104; 134) présente des teneurs en liants organiques plus hautes que le matériau isolant de la coquille isolante (32; 52; 72; 102; 132) logeant la section de conduite tubulaire (22).

16. Structure selon l'une des revendications 13 à 15, ***caractérisée* en ce que** le matériau isolant de la coquille isolante extérieure (38; 54; 74; 104; 134) présente une masse volumique apparente plus haute que le matériau isolant de la coquille isolante logeant la section de conduite tubulaire (22).

17. Structure selon l'une des revendications 13 à 16, ***caractérisée* en ce que** la coquille isolante (32; 52; 72; 102; 132) et la coquille protectrice extérieure (38; 54; 74; 104; 134) sont fixées l'une à l'autre.

18. Structure selon l'une des revendications 13 à 17, ***caractérisée* en ce que** la coquille protectrice extérieure (38; 54; 74; 104; 134) fait saillie au-delà de la coquille isolante (32; 52; 72; 102; 132) en sens axial de la section de conduite tubulaire à loger ou la coquille isolante (32; 52; 72; 102; 132) fait saillie au-delà de la coquille protectrice extérieure en sens axial de la section de conduite tubulaire à loger.

19. Structure selon l'une des revendications 13 à 18, ***caractérisée* en ce que** les fibres minérales de la coquille protectrice extérieure (38; 54; 74; 104; 134) sont orientées en sens radial de l'élément isolant (30; 50; 70; 100; 130).

20. Structure selon l'une des revendications précédentes, ***caractérisée* en ce que** la coquille isolante (16; 32; 52; 72; 92; 102; 122; 132) et/ou la coquille protectrice extérieure (32; 52; 72; 102; 132) sont formées de manière pliante.
